# EUROPÄISCHE PATENTSCHRIFT

(11) **EP 1 754 749 B1**
(45) Veröffentlichungstag und Bekanntmachung des Hinweises auf die Patenterteilung: **31.10.2012**
(21) Anmeldenummer: 06117372.0
(22) Anmeldetag: 18.07.2006
(51) Int. Cl.: C08K 9/06, C08L 21/00, C08K 5/5475, C08K 5/548, C08K 5/549

(54) **Kautschukmischungen**
Rubber mixtures
Compositions de caoutchouc

(30) Priorität: 17.08.2005 DE 102005038794
(43) Veröffentlichungstag der Anmeldung: 21.02.2007
(73) Patentinhaber: Evonik Degussa GmbH, 45128 Essen (DE)
(72) Erfinder: Korth, Karsten, 79639, Grenzach-Wyhlen (DE); Hasse, Andre, 52441, Linnich (DE); Witzsche, Susann, 79618, Rheinfelden (DE); Klockmann, Oliver, 52382, Niederzier (DE); Albert, Philipp, 79539, Lörrach (DE)

(56) Entgegenhaltungen:
- US-A- 3 997 581
- US-A- 4 002 594
- US-A- 4 048 206

## Beschreibung

Die vorliegende Erfindung betrifft Kautschukmischungen, ein Verfahren zu ihrer Herstellung sowie ihrer Verwendung.

Aus US 4,048,206 ist die Synthese von Verbindungen der allgemeinen Formel X'-Z'-Si(OR')₃N, wobei X' = Halogen, HS-, Z' = bivalenter Kohlenwasserstoff und R' = -CH₂-CH₂- oder -CH(CH₃)-CH₂- sein kann, bekannt.

Ferner ist aus J. Gen. Chem. USSR (EN) 45(6), 1975, 1366 (Voronkov et al.) die Synthese von NCS-CH₂-Si (O-CH₂-CH₂)₃N und NCS-CH₂-CH₂-CH₂-Si (O-CH₂-CH₂)₃N durch Umesterung der entsprechenden Methoxysilane mit Triethanolamin unter Freisetzung von Methanol bekannt.

Aus EP 0 919 558 sind Silanderivate der Formel R'''-Si(O-CR'R''-CR'R')₃N bekannt, wobei mindestens ein R" eine Alkenyloxyalkylgruppe ist. Diese Silanderivate können in Silikonverbindungen verwendet werden.

Die Verwendung von Mercaptoalkyltrialkoxysilanen mit silikatischen Füllstoffen in schwefelvernetzten Kautschukmischungen ist unter anderem aus US 4,002,594 bekannt.

Aus US 3997581 ist ein Verfahren zur Herstellung von Verbindungen der Formel Z-Alk-Sₓ-Alk-Z, wobei Z gleich Si(OC₂H₄)₃N sein kann, bekannt, wobei Z-Alk-SH mit Schwefel umgesetzt wird.

Nachteil der bekannten Mercaptoalkyltrialkoxysilane in schwefelvernetzten Kautschukmischungen ist die ungewollte vorzeitige Reaktion mit dem Kautschuk während des Mischprozesses, was die Verarbeitung wegen steigender Mischungsviskositäten erschwert.

Aufgabe der Erfindung ist es, Kautschukmischungen mit verbesserter Verarbeitbarkeit und besseren Vulkanisateigenschaften herzustellen.

Gegenstand der Erfindung sind Kautschukmischungen, welche dadurch gekennzeichnet sind, daß diese mindestens einen Kautschuk und mindestens eine Organosiliciumverbindung der allgemeinen Formel (I),

(Q-)ₖG-Si(-O-CX¹X²-CX¹X³-)₃N (I)

enthalten,
wobei Q gleich oder verschieden und unabhängig voneinander -Halogen, bevorzugt Chlor, Brom oder Iod, -SCN oder -SH ist,
k gleich 1 und 2 ist,
G eine unverzweigte, zyklische oder verzweigte, substituierte oder unsubstituierte, gesättigte oder ungesättigte di-, tri-, tetra- oder pentavalente (C₁-C₂₄)-, bevorzugt (C₂-C₂₄)-, besonders bevorzugt (C₃-C₂₀)-, ganz besonders bevorzugt (C₄-C₁₈)-, außerordentlich bevorzugt (C₅-C₁₈)-, Kohlenwasserstoffkette, gegebenenfalls können die Kohlenwasserstoffketten auch Alkylaromaten (Aralkyl) oder Aromaten enthalten oder damit substituiert sein, bevorzugt können die substituierten Kohlenwasserstoffketten mit Halogen, beispielsweise Cl oder Br, -COOR oder HS- substituiert sein, ist,
X¹, X² und X³ jeweils unabhängig voneinander Wasserstoff (-H), geradkettig unsubstituierte oder verzweigt unsubstituierte (C₁-C₁₆)- Alkyl-, bevorzugt geradkettig unsubstituierte oder verzweigt unsubstituierte (C₁-C₈)-Alkyl-, besonders bevorzugt Methyl oder Ethyl, oder Arylgruppe, bevorzugt Phenyl, bedeuten.

Der Kautschuk kann vorzugsweise ein Dienkautschuk sein.

G-Si kann für k gleich 1 bevorzugt -CH₂-Si, -CH₂CH₂-Si, - CH₂CH₂CH₂-Si, -CH₂CH₂CH₂CH₂-Si, -CH(CH₃)-Si, -CH₂CH(CH₃)-Si, -CH(CH₃)CH₂-Si, -C(CH₃)₂-Si, -CH(C₂H₅)-Si, -CH₂CH₂CH(CH₃)-Si, -CH(CH₃)-CH₂CH₂-Si, -CH₂CH(CH₃)CH₂-Si, -CH₂-C₆H₄-CH₂-Si, -CH₂-C₆H₄-CH₂-CH₂-Si oder -CH₂-CH₂-C₆H₄-CH₂-CH₂-Si sein.

G-Si kann für k gleich 2 bevorzugt -CH(-)-Si, -CH₂-CH(-)-Si, -CH₂-CH(-)-CH₂-Si, -CH₂-CH(-)-CH₂CH₂-Si, -CH₂C(-)(CH₃)-Si, -CH(CH₃)CH(-)-Si, -CH₂-CH(-)-CH(CH₃)-Si, -CH(CH₃)-CH(-)-CH₂-Si, -CH₂-C(CH₃) (-)-CH₂-Si oder -CH₂-CH(-)-C₆H₄-CH₂-CH₂-Si sein.

Organosiliciumverbindungen der allgemeinen Formel (I) können Mischungen von Organosiliciumverbindungen der allgemeinen Formel (I) sein.

Organosiliciumverbindungen der allgemeinen Formel (I) können teilhydrolysierte Verbindungen von Organosiliciumverbindungen der allgemeinen Formel (I) sein.

Organosiliciumverbindungen der allgemeinen Formel (I) mit k gleich 1 können sein:
Cl-CH₂-Si (-O-CH₂-CH₂-) ₃N,
Cl-CH₂-CH₂-Si (-O-CH₂-CH₂-) ₃N,
Cl-CH₂-CH₂-CH₂-Si (-O-CH₂-CH₂-) ₃N,
Cl-CH₂-CH (CH₃) -CH₂-Si (-O-CH₂-CH₂-) ₃N,

Cl-CH₂-Si (-O-CH (CH₃) -CH₂-) ₃N,
Cl-CH₂-CH₂-Si (-O-CH (CH₃) -CH₂-) ₃N,
Cl-CH₂-CH₂-CH₂-Si (-O-CH (CH₃) -CH₂-) ₃N,
Cl-CH₂-CH (CH₃) -CH₂-Si (-O-CH (CH₃) -CH₂-) ₃N,

Br-CH₂-Si (-O-CH₂-CH₂-) ₃N,
Br-CH₂-CH₂-Si (-O-CH₂-CH₂-) ₃N,
Br-CH₂-CH₂-CH₂-Si(-O-CH₂-CH₂-)₃N,
Br-CH₂-CH(CH₃)-CH₂-Si(-O-CH₂-CH₂-)₃N,

Br-CH₂-Si(-O-CH(CH₃)-CH₂-)₃N,
Br-CH₂-CH₂-Si(-O-CH(CH₃)-CH₂-)₃N,
Br-CH₂-CH₂-CH₂-Si(-O-CH (CH₃)-CH₂-)₃N,
Br-CH₂-CH(CH₃)-CH₂-Si(-O-CH (CH₃)-CH₂-)₃N,

I-CH₂-Si(-O-CH₂-CH₂-) ₃N,
I-CH₂-CH₂-Si(-O-CH₂-CH₂-) ₃N,
I-CH₂-CH₂-CH₂-Si (-O-CH₂-CH₂-)₃N,
I-CH₂-CH(CH₃)-CH₂-Si(-O-CH₂-CH₂-)₃N,

I-CH₂-Si(-O-CH (CH₃)-CH₂-) ₃N,
I-CH₂-CH₂-Si(-O-CH(CH₃)-CH₂-) ₃N,
I-CH₂-CH₂-CH₂-Si(-O-CH (CH₃)-CH₂-)₃N,
I-CH₂-CH(CH₃)-CH₂-Si(-O-CH (CH₃)-CH₂-) ₃N,

NCS-CH₂-Si(-O-CH₂-CH₂-) ₃N,
NCS-CH₂-CH₂-Si(-O-CH₂-CH₂-) ₃N,
NCS-CH₂-CH₂-CH₂-Si(-O-CH₂-CH₂-) ₃N,
NCS-CH₂-CH(CH₃)-CH₂-Si (-O-CH₂-CH₂-)₃N,

NCS-CH₂-Si(-O-CH(CH₃)-CH₂-)₃N,
NCS-CH₂-CH₂-Si(-O-CH (CH₃)-CH₂-)₃N,
NCS-CH₂-CH₂-CH₂-Si(-O-CH (CH₃)-CH₂-)₃N,
NCS-CH₂-CH(CH₃)-CH₂-Si(-O-CH(CH₃)-CH₂-)₃N,

HS-CH₂-Si(-O-CH₂-CH₂-)₃N,
HS-CH₂-CH₂-Si(-O-CH₂-CH₂-)₃N,
HS-CH₂-CH₂-CH₂-Si(-O-CH₂-CH₂-)₃N,
S-CH₂-CH(CH₃)-CH₂-Si(-O-CH₂-CH₂-)₃N,

HS-CH₂-Si(-O-CH(CH₃)-CH₂-)₃N,
HS-CH₂-CH₂-Si(-O-CH(CH₃)-CH₂-)₃N,
HS-CH₂-CH₂-CH₂-Si(-O-CH(CH₃)-CH₂-)₃N oder,
HS-CH₂-CH(CH₃)-CH₂-Si(-O-CH(CH₃)-CH₂-)₃N.

Organosiliciumverbindungen der allgemeinen Formel (I) mit k gleich 2 können sein:
Cl-CH₂-CH(Cl)-Si(-O-CH₂-CH₂-)₃N,
Cl-CH₂-CH(Cl)-CH₂-Si(-O-CH₂-CH₂-)₃N,
Cl-CH₂-C(Cl)(CH₃)-CH₂-Si(-O-CH₂-CH₂-)₃N,

Cl-CH₂-CH(Cl)-Si(-O-CH(CH₃)-CH₂-)₃N,
Cl-CH₂-CH(Cl)-Si(-O-CH(CH₃)-CH₂-)₃N,
Cl-CH₂-C(Cl)(CH₃)-CH₂-Si(-O-CH(CH₃)-CH₂-)₃N,

Br-CH₂-CH(Br)-Si(-O-CH₂-CH₂-)₃N,
Br-CH₂-CH(Br)-CH₂-Si(-O-CH₂-CH₂-)₃N,
Br-CH₂-C(Br)(CH₃)-CH₂-Si(-O-CH₂-CH₂-)₃N,

Br-CH₂-CH(Br)-Si(-O-CH(CH₃)-CH₂-)₃N,
Br-CH₂-CH(Br)-Si(-O-CH(CH₃)-CH₂-)₃N,
Br-CH₂-C(Br)(CH₃)-CH₂-Si(-O-CH(CH₃)-CH₂-)₃N,

I-CH₂-CH(I)-Si(-O-CH₂-CH₂-)₃N,
I-CH₂-CH(I)-CH₂-Si(-O-CH₂-CH₂-)₃N,
I-CH₂-C(I)(CH₃)-CH₂-Si(-O-CH₂-CH₂-)₃N,

I-CH₂-CH(I)-Si(-O-CH(CH₃)-CH₂-)₃N,
I-CH₂-CH(I)-Si(-O-CH(CH₃)-CH₂-)₃N,
I-CH₂-C(I) (CH₃)-CH₂-Si(-O-CH(CH₃)-CH₂-)₃N,

NCS-CH₂-CH(SCN)-Si(-O-CH₂-CH₂-)₃N,
NCS-CH₂-CH(SCN)-CH₂-Si(-O-CH₂-CH₂-)₃N,
NCS-CH₂-C(SCN) (CH₃)-CH₂-Si(-O-CH₂-CH₂-) ₃N,

NCS-CH₂-CH(SCN)-Si(-O-CH(CH₃)-CH₂-)₃N,
NCS-CH₂-CH(SCN)-Si(-O-CH(CH₃)-CH₂-)₃N,
NCS-CH₂-C(SCN) (CH₃)-CH₂-Si(-O-CH(CH₃)-CH₂-)₃N,

HS-CH₂-CH(SH)-Si(-O-CH₂-CH₂-)₃N,
HS-CH₂-CH(SH)-CH₂-Si(-O-CH₂-CH₂-)₃N,
HS-CH₂-C(SH) (CH₃)-CH₂-Si(-O-CH₂-CH₂-)₃N,

HS-CH₂-CH(SH)-Si(-O-CH(CH₃)-CH₂-)₃N,
HS-CH₂-CH(SH)-Si(-O-CH(CH₃)-CH₂-)₃N oder
HS-CH₂-C(SH) (CH₃)-CH₂-Si(-O-CH(CH₃)-CH₂-)₃N.

Die Organosiliciumverbindungen der Formel (I) können hergestellt werden, indem man mindestens eine Verbindung der allgemeinen Formel (II),

(Q-)ₖG-Si(-O-Alk)₃ (II)

wobei G, Q und k die oben angegebenen Bedeutungen haben und Alk unabhängig voneinander (C₁-C₂₄)-Alkyl, bevorzugt Methyl, Ethyl oder Propyl, ist,
mit Verbindungen der allgemeinen Formel III,

(HO-CX¹X²-CX¹X³-)₃N (III)

wobei X¹, X², und X³ die oben angegebenen Bedeutungen haben,
unter Abspaltung von Alk-OH umsetzt und Alk-OH vom Reaktionsgemisch abtrennt.

Die Umsetzung kann katalysiert oder unkatalysiert erfolgen. Das Alk-OH kann vom Reaktionsgemisch kontinuierlich oder diskontinuierlich abgetrennt werden.

Beispiele für Verbindungen der allgemeinen Formel III können sein: Triethanolamin, Triisopropanolamin und [HOCH(Phenyl)CH₂]₃N.

Ein niedriger Wassergehalt der verwendeten Verbindungen der Formel III kann sich günstig auf die Zusammensetzung und die Produkteigenschaften der Verbindungen auswirken. Bevorzugt können die Verbindungen der Formel III einen Wassergehalt von kleiner 1 Gew.-%, besonders bevorzugt von kleiner 0,5 Gew.-%, ganz besonders bevorzugt von kleiner 0,3 Gew.-%, außerordentlich bevorzugt von kleiner 0,2 Gew.-%, aufweisen.

Die Umsetzung kann in typischen organischen Lösungsmitteln mit einem Siedepunkt von kleiner 200°C, bevorzugt kleiner 160°C, besonders bevorzugt kleiner 130°C, ganz besonders bevorzugt kleiner 100°C, durchgeführt werden.

Die Umsetzung kann in Abwesenheit von organischen Lösungsmitteln mit einem Siedepunkt von kleiner 220°C, bevorzugt kleiner 180°C, besonders bevorzugt kleiner 150°C, ganz besonders bevorzugt kleiner 120°C, durchgeführt werden.

Die Umsetzung kann man in Abwesenheit von organischen Lösungsmitteln durchführen.

Die Umsetzung kann so durchgeführt werden, daß mindestens eine Ausgangsverbindung in der Schmelze, Lösung oder Suspension ist.

Die Umsetzung kann so durchgeführt werden, daß mindestens ein Reaktionsprodukt in der Schmelze, Lösung oder Suspension ist.

Die Umsetzung in Abwesenheit von organischen Lösungsmitteln kann wegen der höheren erzielten Ausbeute gegenüber Reaktionen in Lösungsmitteln bevorzugt sein.

Die Umsetzung in Abwesenheit von organischen Lösungsmitteln kann wegen der höheren erzielten Reinheit der Produkte gegenüber Reaktionen in Lösungsmitteln bevorzugt sein.

Die Umsetzung in Abwesenheit von organischen Lösungsmitteln kann wegen der Abwesenheit von Lösungsmittelspuren in den Produkten bevorzugt sein.

Die Umsetzung in Abwesenheit von organischen Lösungsmitteln kann wegen der Minimierung von flüchtigen Verbindungen (volatile organic compounds = VOC) in den erhaltenen Produkten bevorzugt sein.

Die Umsetzung in Abwesenheit von organischen Lösungsmitteln kann wegen des Verzichts auf einen verfahrenstechnischen Trocknungsschritt, zur Entfernung von Lösungsmittelspuren, gegenüber der Umsetzung in organischen Lösungsmitteln bevorzugt sein.

Als Katalysator bei dem Verfahren zur Herstellung von Organosiliciumverbindungen der Formel (I) können metallfreie oder metallhaltige Katalysatoren eingesetzt werden.

Als metallhaltige Katalysatoren können Metallverbindungen der 3.-7. Gruppe, der 13.-14.Gruppe und/oder der Lanthanidengruppe eingesetzt werden.

Als metallhaltige Katalysatoren können Übergangsmetallverbindungen eingesetzt werden.

Die metallhaltigen Katalysatoren können Metallverbindungen, wie beispielsweise Metallchloride, Metalloxide, Metalloxychloride, Metallsulfide, Metallsulfochloride, Metallalkoholate, Metallthiolate, Metalloxyalkoholate, Metallamide, Metallimide oder Übergangsmetallverbindungen mit multiplen gebundenen Liganden, sein.

Beispielsweise können als Metallverbindungen Halogenide, Amide oder Alkoholate der 3. Hauptgruppe (M³⁺= B, Al, Ga, In, Tl : M³⁺(OMe)₃, M³⁺(OEt)₃, M³⁺(OC₃H₇)₃, m³⁺(OC₄H₉)₃),
Halogenide, Oxide, Sulfide, Imide, Alkoholate, Amide, Thiolate und Kombinationen der genannten Substituentenklassen mit mehrfach gebundenen Liganden an Verbindungen der Lanthaniden-Gruppe (Seltenen Erden, Ordnungszahl 58 bis 71 im Periodensystem der Elemente), Halogenide, Oxide, Sulfide, Imide, Alkoholate, Amide, Thiolate und Kombinationen der genannten Substituentenklassen mit mehrfach gebundenen Liganden an Verbindungen der 3. Nebengruppe (M³⁺= Sc, Y, La: M³⁺(OMe)₃, M³⁺(OEt)₃, M³⁺(OC₃H₇)₃, M³⁺(OC₄H₉)₃, CpM³⁺(Cl)₂, cp cpM³⁺(OMe)₂, cpM³⁺(OEt)₂, cpM³⁺(NMe₂)₂ mit cp = Cyclopentadienyl),
Halogenide, Sulfide, Amide, Thiolate oder Alkoholate der 4. Hauptgruppe (M⁴⁺=Si,Ge,Sn,Pb: M⁴⁺(OMe)₄, M⁴⁺(OEt)₄, M⁴⁺(OC₃H₇)₄, M⁴⁺(OC₄H₉)₄; M²⁺=Sn, Pb: M²⁺(OMe)₂, M²⁺(OEt)₂, M²⁺(OC₃H₇)₂, M²⁺(OC₄H₉)₂), Zinndilaurat, Zinndiacetat, Sn (OBu)₂,
Halogenide, Oxide, Sulfide, Imide, Alkoholate, Amide, Thiolate und Kombinationen der genannten Substituentenklassen mit mehrfach gebundenen Liganden an Verbindungen der 4. Nebengruppe (M⁴⁺=Ti,Zr,Hf: M⁴⁺(F)₄, M⁴⁺(Cl)₄, M⁴⁺(Br)₄, M⁴⁺(I)₄, M⁴⁺(OMe)₄, M⁴⁺(OEt)₄, M⁴⁺(OC₃H₇)₄, M⁴⁺(OC₄H₉)₄, cp₂Ti(Cl)₂, cp₂Zr(Cl)₂, cp₂Hf(Cl)₂, cp₂Ti(OMe)₂, cp₂Zr(OMe)₂ ,cp₂Hf(OMe)₂, cpTi(Cl)₃, cpZr(Cl)₃, cpHf(Cl)₃, cpTi(OMe)₃, cpZr(OMe)₃, cpHf(OMe)₃, M⁴⁺(NMe₂)₄, M⁴⁺(NEt₂)₄, M⁴⁺(NHC₄H₉)₄),
Halogenide, Oxide, Sulfide, Imide, Alkoholate, Amide, Thiolate und Kombinationen der genannten Substituentenklassen mit mehrfach gebundenen Liganden an Verbindungen der 5. Nebengruppe (M⁵⁺, M⁴⁺ oder M³⁺=V,Nb,Ta: M⁵⁺(OMe)₅, M⁵⁺(OEt)₅, M⁵⁺(OC₃H₇)₅, M⁵⁺(OC₄H₉)₅, M³⁺O(OMe)₃, M³⁺O(OEt)₃, M³⁺O(OC₃H₇)₃, M³⁺O(OC₄H₉)₃, cpV(OMe)₄, cpNb(OMe)₃ ,cpTa(OMe)₃, cpV(OMe)₂, cpNb(OMe)₃, cpTa(OMe)₃),
Halogenide, Oxide, Sulfide, Imide, Alkoholate, Amide, Thiolate und Kombinationen der genannten Substituentenklassen mit mehrfach gebundenen Liganden an Verbindungen der 6. Nebengruppe (M⁶⁺, M⁵⁺ oder M⁴⁺=Cr,Mo,W: M⁶⁺(OMe)₆, M⁶⁺(OEt)₆, M⁶⁺(OC₃H₇)₆, M⁶⁺(OC₄H₉)₆, M⁶⁺O (OMe)₄, M⁶⁺O (OEt)₄, M⁶⁺O (OC₃H₇)₄, M⁶⁺O(OC₄H₉)₄, M⁶⁺O₂(OMe)₂, M⁶⁺O₂(OEt)₂, M⁶⁺O₂(OC₃H₇)₂, M⁶⁺O₂(OC₄H₉)₂, M⁶⁺O₂(OSiMe₃)₂) oder Halogenide, Oxide, Sulfide, Imide, Alkoholate, Amide, Thiolate und Kombinationen der genannten Substituentenklassen mit mehrfach gebundenen Liganden an Verbindungen der 7. Nebengruppe (M⁷⁺, M⁶⁺, M⁵⁺ oder M⁴⁺=Mn, Re: M⁷⁺O (OMe)₅, M⁷⁺O(OEt)₅, M⁷⁺O (OC₃H₇)₅, M⁷⁺O (OC₄H₉)₅, M⁷⁺O₂(OMe)₃, M⁷⁺O₂(DEt)₃, M⁷⁺O₂(OC₃H₇)₃, M⁷⁺O₂(OC₄H₉)₃, M⁷⁺O₂(OSiMe₃)₃, M⁷⁺O₃(OSiMe₃), M⁷⁺O₃(CH₃)) verwendet werden.

Die Metall- und Übergangsmetallverbindungen können eine freie Koordinationsstelle am Metall besitzen.

Als Katalysatoren können auch Metall- oder Übergangsmetallverbindungen verwendet werden, die durch Wasserzugabe zu hydrolysierbaren Metall- oder Übergangsmetallverbindungen gebildet werden.

Beispielsweise können als metallhaltige Katalysatoren Titanalkoxide eingesetzt werden.

Insbesondere können Titanate, wie beispielsweise Tetra-n-butyl-orthotitanat, Tetraethyl-orthotitanat, Tetra-n-propyl-orthotitanat oder Tetra-iso-propyl-orthotitanat, als Katalysatoren eingesetzt werden.

Als metallfreie Katalysatoren können organische Säuren eingesetzt werden.

Als organische Säuren können beispielsweise Trifluoressigsäure, Trifluormethansulfonsäure oder p-Toluolsulfonsäure, Trialkylammoniumverbindungen R₃NH⁺X⁻ oder organische Basen, wie beispielsweise Trialkylamine NR₃, eingesetzt werden.

Das Herstellungs-Verfahren kann bei Normaldruck oder reduziertem Druck, bevorzugt zwischen 1 und 600 mbar, besonders bevorzugt zwischen 5 und 400 mbar, ganz besonders bevorzugt zwischen 5 und 200 mbar, durchgeführt werden.

Das Herstellungs-Verfahren kann im Temperaturbereich zwischen 50°C und 200°C, bevorzugt zwischen 70°C und 180°C, besonders bevorzugt zwischen 90°C und 150°C, durchgeführt werden.

Dem Reaktionsgemisch können vor oder während der Reaktion Substanzen zugesetzt werden, die den Wassertransport aus dem Produkt durch Bildung azeotroper Gemische fördern. Die entsprechenden Substanzen können cyclische oder geradkettige Aliphaten, Aromaten, gemischt aromatischaliphatische Verbindungen, Ether, Alkohole oder Säuren sein. Beispielsweise können Hexan, Cyclohexan, Benzol, Toluol, Ethanol, Propanol, iso-Propanol, Butanol, Ethylenglycol, Tetrahydrofuran, Dioxan, Ameisensäure, Essigsäure, Ethylacetat oder Dimetyhlformamid eingesetzt werden.

Die Reaktion kann kontinuierlich oder diskontinuierlich durchgeführt werden.

Bei dem Herstellungs-Verfahren können vor, während oder nach der Reaktion der Reaktionsmischung Additive zugesetzt werden. Die Additive können bevorzugt vor der Reaktion zugesetzt werden.

Zur Vermeidung von Kondensationsreaktionen kann es vorteilhaft sein, die Reaktion in einer wasserfreien Umgebung, idealerweise in einer Inertgasatmosphäre, durchzuführen.

Die Organosiliciumverbindungen der Formel (I) können als Haftvermittler zwischen anorganischen Materialien, zum Beispiel Glasfasern, Metallen, oxidischen Füllstoffen oder Kieselsäuren, und organischen Polymeren, zum Beispiel Duroplasten, Thermoplasten oder Elastomeren, beziehungsweise als Vernetzungsmittel und Oberflächenmodifizierungsmittel verwendet werden. Die Organosiliciumverbindungen der Formel (I) können als Kopplungsreagenzien in gefüllten Kautschukmischungen, beispielsweise Reifenlaufflächen, verwendet werden.

Die Organosiliciumverbindungen der allgemeinen Formel (I) können in Mengen von 0,1 bis 50 Gew-%, bevorzugt 0,1 bis 25 Gew.-%, besonders bevorzugt 1 bis 20 Gew.-%, bezogen auf die Menge des eingesetzten Kautschuks, eingesetzt werden.

Ein weiterer Gegenstand der Erfindung ist ein Verfahren zur Herstellung der erfindungsgemäßen Kautschukmischungen, welches dadurch gekennzeichnet ist, daß man mindestens einen Kautschuk und eine Organosiliciumverbindung der Formel (I) mischt.

Die Kautschukmischung kann mindestens einen Füllstoff enthalten.

Die Zugabe der Organosiliciumverbindungen der allgemeinen Formel (I), sowie die Zugabe der Füllstoffe kann bei Massetemperaturen von 100 bis 200 °C erfolgen. Sie kann jedoch auch bei tieferen Temperaturen von 40 bis 100 °C, zum Beispiel zusammen mit weiteren Kautschukhilfsmitteln, erfolgen.

Die Organosiliciumverbindungen der Formel (I) können sowohl in reiner Form als auch aufgezogen auf einen inerten organischen oder anorganischen Träger, sowie vorreagiert mit einem organischen oder anorganischen Träger dem Mischprozeß zugegeben werden. Bevorzugte Trägermaterialien können gefällte oder pyrogene Kieselsäuren, Wachse, Thermoplaste, natürliche oder synthetische Silikate, natürliche oder synthetische Oxide, bevorzugt Aluminiumoxid, oder Ruße sein. Desweiteren können die Organosiliciumverbindungen auch vorreagiert mit dem einzusetzenden Füllstoff dem Mischprozeß zugegeben werden.

Die Organosiliciumverbindungen der Formel (I) können physikalisch vermischt mit einem organischen Stoff oder einem organischen Stoffgemisch dem Mischprozess zugegeben werden. Der organische Stoff oder das organische Stoffgemisch kann Polymere oder Oligomere enthalten. Die Polymere oder Oligomere, können heteroatom-enthaltende Polymere oder Oligomere, zum Beispiel Ethylenvinylalkohol, Ethylenvinylacetat, Polyvinylacetat oder/und Polyvinylalkohole, sein. Polymere oder Oligomere können gesättigte oder ungesättigte Elastomere, bevorzugt Emulsions-SBR oder/und Lösungs-SBR, sein. Der Schmelzpunkt der Mischung aus Organosiliciumverbindungen und organischem Stoff oder einem organischen Stoffgemisch kann zwischen 50 und 200°C, bevorzugt zwischen 70 und 180°C, besonders bevorzugt zwischen 70 und 150°C, ganz besonders bevorzugt zwischen 70 und 130°C, außerordentlich bevorzugt zwischen 90 und 110°C, betragen. Der organische Stoff oder das organische Stoffgemisch kann mindestens ein olefinisches Wachs und/oder langkettigen Carbonsäuren enthalten.

Als Füllstoffe können für die erfindungsgemäßen Kautschukmischungen die folgenden Füllstoffe eingesetzt werden:
- Ruße: Die hierbei zu verwendenden Ruße können nach dem Flammruß-, Furnace-, Gasruß oder Thermalruß-Verfahren hergestellt werden. Die Ruße können eine BET-Oberfläche von 20 bis 200 m²/g haben. Die Ruße können gegebenenfalls auch dotiert sein, wie zum Beispiel mit Si.
- Amorphe Kieselsäuren, hergestellt zum Beispiel durch Fällung von Lösungen von Silikaten (gefällte Kieselsäuren) oder Flammenhydrolyse von Siliciumhalogeniden (pyrogene Kieselsäuren). Die amorphen Kieselsäuren können eine spezifische Oberfläche von 5 bis 1000 m²/g, vorzugsweise 20 bis 400 m²/g (BET-Oberfläche) und eine Primärteilchengröße von 10 bis 400 nm haben. Die Kieselsäuren können gegebenenfalls auch als Mischoxide mit anderen Metalloxiden, wie Al-, Mg-, Ca-, Ba-, Zn- und Titanoxiden, vorliegen.
- Synthetische Silikate, wie Aluminiumsilikat oder Erdalkalisilikate, beispielsweise Magnesiumsilikat oder Calciumsilikat. Die synthetischen Silikate mit BET-Oberflächen von 20 bis 400 m²/g und Primärteilchendurchmessern von 10 bis 400 nm.
- Synthetische oder natürliche Aluminiumoxide und - hydroxide.
- Natürliche Silikate, wie Kaolin und andere natürlich vorkommende Kieselsäuren.
- Glasfaser und Glasfaserprodukte (Matten, Stränge) oder Mikroglaskugeln.

Bevorzugt können amorphe Kieselsäuren, hergestellt durch Fällung von Lösungen von Silikaten (gefällte Kieselsäuren), mit BET-Oberflächen von 20 bis 400 m²/g in Mengen von 5 bis 150 Gew.-Teilen, jeweils bezogen auf 100 Teile Kautschuk, eingesetzt werden.

Die genannten Füllstoffe können alleine oder im Gemisch eingesetzt werden. In einer besonders bevorzugten Ausführung des Verfahrens können 10 bis 150 Gew.-Teile helle Füllstoffe, gegebenenfalls zusammen mit 0 bis 100 Gew.-Teilen Ruß, sowie 1 bis 20 Gew.-Teile einer Verbindung der Organosiliciumverbindungen, jeweils bezogen auf 100 Gew.-Teile Kautschuk, zur Herstellung der Mischungen eingesetzt werden.

Für die Herstellung der erfindungsgemäßen Kautschukmischungen eignen sich neben Naturkautschuk auch Synthesekautschuke. Bevorzugte Synthesekautschuke sind beispielsweise bei W. Hofmann, Kautschuktechnologie, Genter Verlag, Stuttgart 1980, beschrieben. Sie umfassen unter anderem
- Polybutadien (BR),
- Polyisopren (IR),
- Styrol/Butadien-Copolymerisate, beispielsweise Emulsions-SBR (E-SBR) oder Lösungs-SBR (L-SBR), vorzugsweise mit einem Styrolgehalt von 1 bis 60 Gew.-%, besonders bevorzugt 2 bis 50 Gew.-%, bezogen auf das Gesamtpolymer,
- Chloropren (CR),
- Isobutylen/Isopren-Copolymerisate (IIR),
- Butadien/Acrylnitril-Copolymere, vorzugsweise mit einem Acrylnitrilgehalt von 5 bis 60 Gew.-%, vorzugsweise 10 bis 50 Gew.-%, bezogen auf das Gesamtpolymer (NBR),
- teilhydrierter oder vollständig hydrierter NBR-Kautschuk (HNBR),
- Ethylen/Propylen/Dien-Copolymerisate (EPDM) oder
- oben genannte Kautschuke, die zusätzlich funktionelle Gruppen besitzen, wie z.B. Carboxy- , Silanol- oder Epoxygruppen, beispielsweise Epoxidierter NR, Carboxy-funktionalisierter NBR oder Silanol- (-SiOH) bzw. Siloxy-funktionalisierter (-Si-OR) SBR,
sowie Mischungen dieser Kautschuke. Für die Herstellung von PKW-Reifenlaufflächen sind insbesondere anionisch polymerisierte L-SBR-Kautschuke (Lösungs-SBR) mit einer Glastemperatur oberhalb von -50 °C sowie deren Mischungen mit Dienkautschuken von Interesse.

Die erfindungsgemäßen Kautschukvulkanisate können weitere Kautschukhilfsstoffe enthalten, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren, wie Diphenylguanidin, Triethanolamin, Polyethylenglykol, Alkoxyterminiertes Polyethylenglykol Alkyl-O-(CH₂-CH₂-O)_{yI}-H mit y^{I} = 2-25, bevorzugt y^{I}=2-15, besonders bevorzugt y^{I}=3-10, ganz besonders bevorzugt y^{I}=3-6, oder Hexantriol, die der Kautschukindustrie bekannt sind.

Die Vulkanisation der erfindungsgemäßen Kautschukmischungen kann ohne Zusatz von stickstoffhaltigen Aktivatoren, wie beispielsweise Guanidine und Amine, durchgeführt werden. In einer bevorzugten Ausführungsform kann das Kautschukvulkanisat frei von Guanidinderivaten sein.

Die Kautschukhilfsmittel können in bekannten Mengen, die sich unter anderem nach dem Verwendungszweck richten, eingesetzt werden. Übliche Mengen können zum Beispiel Mengen von 0,1 bis 50 Gew.-%, bezogen auf Kautschuk, sein. Als Vernetzer können Schwefel oder schwefelspendende Substanzen eingesetzt werden. Die erfindungsgemäßen Kautschukmischungen können darüber hinaus Vulkanisationsbeschleuniger enthalten. Beispiele für geeignete Vulkanisationsbeschleuniger können Mercaptobenzthiazole, Sulfenamide, Guanidine, Thiurame, Dithiocarbamate, Thioharnstoffe und Thiocarbonate sein. Die Vulkanisationsbeschleuniger und Schwefel können in Mengen von 0,1 bis 10 Gew.-%, bevorzugt 0.1 bis 5 Gew.-%, bezogen auf Kautschuk, eingesetzt werden.

Die Vulkanisation der erfindungsgemäßen Kautschukmischungen kann bei Temperaturen von 100 bis 200 °C, bevorzugt 130 bis 180 °C, gegebenenfalls unter Druck von 10 bis 200 bar erfolgen. Die Abmischung der Kautschuke mit dem Füllstoff, gegebenenfalls Kautschukhilfsmitteln und der Organosiliciumverbindungen kann in bekannten Mischaggregaten, wie Walzen, Innenmischern und Mischextrudern, durchgeführt werden.

Die erfindungsgemäßen Kautschukmischungen können zur Herstellung von Formkörpern, zum Beispiel für die Herstellung von Luftreifen, Reifenlaufflächen, Kabelmänteln, Schläuchen, Treibriemen, Förderbändern, Walzenbelägen, Reifen, Schuhsohlen, Dichtungsringen und Dämpfungselementen, verwendet werden.

Die erfindungsgemäßen Kautschukmischungen haben den Vorteil, dass diese eine verbesserte Verarbeitbarkeit und bessere Vulkanisationseigenschaften gegenüber den bekannten Mercaptoalkyltrialkoxysilanen haben.

### Beispiele

**Beispiel 1** Herstellung von HS-CH₂-CH₂-CH₂-Si(O-CH₂-CH₂)₃N
   (In Anlehnung an J. Gen. Chem. USSR (EN), 45, 1975, 1618)
   Das HS-CH₂-CH₂-CH₂-Si(O-CH₂-CH₂)₃N wird aus kommerziell erhältlichem HS-CH₂-CH₂-CH₂-Si(O-CH₂-CH₃)₃ mit einer equimolaren Menge Triethanolamin in Gegenwart von Ti(OBu)₄ bei 110-140° unter reduziertem Druck innerhalb von 180-360 min durch Umesterung in Substanz synthetisiert. Das entstehende Ethanol wird abdestilliert.
**Beispiel 2** Herstellung von Cl-CH₂-CH₂-CH₂-Si (O-CH₂-CH₂) ₃N
   (In Anlehnung an J. Gen. Chem. USSR (EN), 45, 1975, 1618)
   Das Cl-CH₂-CH₂-CH₂-Si (O-CH₂-CH₂) ₃N wird aus kommerziell erhältlichem Cl-CH₂-CH₂-CH₂-Si (O-CH₂-CH₃)₃ mit einer equimolaren Menge Triethanolamin in Gegenwart von Ti(OBu)₄ bei 120-160° unter reduziertem Druck innerhalb von 180-360 min durch Umesterung in Substanz synthetisiert. Das entstehende Ethanol wird abdestilliert.
**Beispiel 3** Gummitechnische Untersuchungen
   Die für die Kautschukmischungen verwendete Rezeptur ist in der folgenden Tabelle 1 angegeben. Dabei bedeutet die Einheit phr Gewichtsanteile, bezogen auf 100 Teile des eingesetzten Rohkautschuks. Die Organosiliciumverbindungen werden equimolar, d.h. mit gleicher Stoffmenge eingesetzt.

### Folgende Kopplungsagentien werden untersucht:

In Mischung 1: Mercaptopropyltriethoxysilan, VP Si 263 der Degussa AG (Vergleichsbeispiel)
In Mischung 2: Organosiliciumverbindung gemäß Beispiel 1

Das allgemeine Verfahren zur Herstellung von Kautschukmischungen und deren Vulkanisate ist in dem Buch: "Rubber Technology Handbook", W. Hofmann, Hanser Verlag 1994 beschrieben.

**Tabelle 1:**

| | Mischung 1 | Mischung 2 |
|---|---|---|
| | | |
| | Mercaptopropyltriethoxysilan [phr] | Organosiliciumverbindung gemäß Bsp.1 [phr] |
| **1. Stufe** | | |
| Buna VSL 5025-1 | 96 | 96 |
| Buna CB 24 | 30 | 30 |
| Ultrasil 7000 GR | 80 | 80 |
| Oranosiliciumverbindung | 2,4 | 2,51 |
| ZnO | 3 | 3 |
| Stearinsäure | 2 | 2 |
| Naftolen ZD | 10 | 10 |
| Vulkanox 4020 | 1,5 | 1,5 |
| Protektor G 3108 | 1 | 1 |

| **2. Stufe** | | |
|---|---|---|
| Batch Stufe 1 | | |

| **3. Stufe** | | |
|---|---|---|
| Batch Stufe 2 | | |
| Vulkacit D | 2 | 2 |
| Vulkacit CZ | 1,5 | 1,5 |
| Perkacit TBzTD | 0,2 | 0,2 |
| Schwefel | 2,2 | 2,2 |

Bei dem Polymer VSL 5025-1 handelt es sich um ein in Lösung polymerisiertes SBR-Copolymer der Bayer AG, mit einem Styrolgehalt von 25 Gew.-% und einem Butadiengehalt von 75 Gew.-%. Das Copolymer enthält 37,5 phr Öl und weist eine Mooney-Viskosität (ML 1+4/100°C) von 50 auf.

Bei dem Polymer Buna CB 24 handelt es sich um ein cis-1,4-Polybutadien (Neodymtyp) der Bayer AG, mit cis-1,4-Gehalt von mindestens 96 % und einer Mooney-Viskosität von 44±5.

Ultrasil 7000 GR ist eine leicht dispergierbare Kieselsäure der Degussa AG und besitzt eine BET-Oberfläche von 170 m²/g.

Als aromatisches Öl wird Naftolen ZD der Chemetall verwendet, bei Vulkanox 4020 handelt es sich um PPD der Bayer AG und Protektor G3108 ist ein Ozonschutzwachs der Paramelt B.V.. Vulkacit CZ (CBS) und Vulkacit D (DPG) sind Handelsprodukte der Bayer AG. Perkacit TBzTD (Tetrabenzylthiuramtetrasulfid) ist ein Produkt von Flexsys N.V..

Die Kautschukmischungen werden in einem Innenmischer entsprechend der Mischvorschrift in Tabelle 2 hergestellt.

**Tabelle 2**

| Stufe 1 | | |
|---|---|---|
| Einstellungen | | |
| Mischaggregat | | Werner & Pfleiderer E-Typ |
| Drehzahl | | 60 min⁻¹ |
| Stempeldruck | | 5,5 bar |
| Leervolumen | | 1,58 L |
| Füllgrad | | 0,56 |
| Durchflußtemp. | | 70 °C |

| Mischvorgang | | |
|---|---|---|
| 0 bis | 1 min | Buna VSL 5025-1 + Buna CB 24 |
| 1 bis | 2 min | 1/2 Kieselsäure, ZnO, Stearinsäure, |
| | | Naftolen ZD, Kopplungsagens |
| 2 bis | 4 min | 1/2 Kieselsäure, Vulkanox, Protektor |
| 4 bis | 5 min | Mischen |
| | 5 min | Lüften |
| 5 bis | 6 min | Mischen und ausfahren |
| Batch-Temp. | | 145-155°C |
| Lagerung | | 24 h bei Raumtemperatur |

| Stufe 2 | | |
|---|---|---|
| Einstellungen | | |
| Mischaggregat | | Wie in Stufe 1 bis auf: |
| Drehzahl | | 70 min⁻¹ |
| Durchflußtemp. | | 70 °C |
| Füllgrad | | 0,53 |

| Mischvorgang | | |
|---|---|---|
| 0 bis | 2 min | Batch Stufe 1 aufbrechen |
| 2 bis | 5 min | Batchtemperatur 150°C durch Drehzahlvariation halten |
| | 5 min | Ausfahren |
| | | |
| Batch-Temp. | | 145-155°C |
| Lagerung | | 4 h bei Raumtemperatur |

| Stufe 3 | | |
|---|---|---|
| Einstellungen | | |
| Mischaggregat | | wie in Stufe 1 bis auf |
| Drehzahl | | 40 min⁻¹ |
| Füllgrad | | 0,50 |
| Durchflußtemp. | | 50 °C |

| Mischvorgang | | |
|---|---|---|
| 0 bis | 2 min | Batch Stufe 2, Beschleuniger, Schwefel |
| | | |
| | 2 min | ausfahren und auf Labormischwalzwerk Fell bilden |
| | | (Durchmesser 200 mm, Länge 450 mm, Durchflußtemperatur 50°C) |
| | | |
| | | Homogenisieren: |
| | | 3* links, 3* rechts einschneiden und |
| | | 8* bei weitem Walzenspalt (6 mm) und |
| | | 3* bei engem Walzenspalt (3 mm) |
| | | Fell ausziehen. |
| Batch-Temp. | | < 110°C |

In Tabelle 3 sind die Methoden für die Gummitestung zusammengestellt.

**Tabelle 3**

| Physikalische Testung | | Norm/Bedingungen |
|---|---|---|
| ML 1+4, 100°C, 3. Stufe | | DIN 53523/3, ISO 667 |
| Vulkameterprüfung, 165°C | | DIN 53529/3, ISO 6502 |
| | Dmax-Dmin (dNm) | |
| Zugversuch am Ring, 23°C | | DIN 53504, ISO 37 |
| | Zugfestigkeit (MPa) | |
| | Bruchdehnung (%) | |
| Shore-A-Härte, 23°C (SH) | | DIN 53 505 |
| Ball | Rebound, 60°C (%) | ASTM D 5308 |
| Goodrich-Flexometertest, 0,250 inch Hub, 25 min, 23 °C | | DIN 53533, ASTM D 623 A |
| | Kontakttemperatur (°C) | |
| | Einstichtemperatur (°C) | |
| | Permanent Set (%)Shore-A-Härte, 23°C (SH) | DIN 53 505 |
| Viskoelastische Eigenschaften, | | DIN 53 513, ISO 2856 |
| 60°C, 16 Hz, 50 N Vorkraftund | | 25 N Amplitudenkraft |
| Verlustfaktor tan δ (-) | | |

Die Tabelle 4 zeigt die Ergebnisse der gummitechnischen Prüfung. Die Mischungen werden 25 min bei 165°C vulkanisiert.

**Tabelle 4**

| **Rohmischungsdaten** | **Einheit** | **Mischung 1 (Vergleichsbsp.)** | **Mischung 2** |
|---|---|---|---|
| ML 1+4, 3. Stufe | [-] | 67 | 62 |
| Dmax-Dmin | [dNm] | 13,9 | 13,9 |

| **Vulkanisatdaten** | **Einheit** | **Mischung 1 (Vergleichsbsp.)** | **Mischung 2** |
|---|---|---|---|
| Zugfestigkeit | [MPa] | 12,8 | 13,5 |
| Bruchdehnung | [%] | 310 | 340 |
| Shore-A-Härte | [-] | 57 | 56 |
| Ball-Rebound | [%] | 71,0 | 71,1 |
| Kontakttemperatur | [°C] | 52 | 50 |
| Einstichtemperatur | [°C] | 92 | 89 |
| Permanent Set | [%] | 2,4 | 2,0 |
| tan δ | [-] | 0,068 | 0,068 |

Wie man anhand der Daten in der Tabelle 4 erkennen kann, zeichnet sich die Kautschukmischung 2 durch eine verbesserte Verarbeitung aus, da die Mischungsviskosität deutlich niedriger ist. Gleichzeitig ist aber der Dmax-Dmin identisch, was zeigt, daß die Vernetzungsreaktion vergleichbar ist.

Im Bereich der Vulkanisatdaten zeichnet sich die Kautschukmischung 2 gegenüber der Mischung 1 durch eine verbesserte Zugfestigkeit und eine höhere Bruchdehnung aus. Dies ist ein besonders vorteilhaftes Zug-Dehnungsverhalten. Bei vergleichbarer Härte zeigt sich zudem für Mischung 2 ein niedrigerer Wärmeaufbau und eine niedrigere dauerhafte Verformung (Permanent Set), was besonders vorteilhaft für die Lebensdauer von dynamisch verformten Gummimischungen, wie Reifenlaufflächen oder Dämpfungselementen, ist.

Es kann somit gezeigt werden, daß durch die Verwendung der beschriebenen Organosiliciumverbindungen gemäß Formel I in Kautschukmischungen gegenüber Mischungen des Stands der Technik, ihre Verarbeitung verbessert und gleichzeitig Vorteile in Vulkanisateigenschaften erreicht werden können.

Ein weiterer Vorteil ist, daß bei der Herstellung der erfindungsgemäßen Kautschukmischungen weniger flüchtige Bestandteile (VOC) freigesetzt werden können.

### Beispiel 4 Herstellung von HS-CH₂-CH₂-CH₂-Si(O-CH(CH₃)-CH₂)₃N

Das HS-CH₂-CH₂-CH₂-Si(O-CH(CH₃)-CH₂)₃N wird aus 349 g kommerziell erhältlichem HS-CH₂-CH₂-CH₂-Si(O-CH₂-CH₃)₃ mit 280 g Triisopropanolamin in Gegenwart von 6 g NaOH bei 110-140° unter reduziertem Druck durch Umesterung in Substanz synthetisiert. Das entstehende Ethanol wird abdestilliert und man erhält 425 g eines sehr viskosen, farblosen Öls.

### Beispiel 5 Gummitechnische Untersuchung

Die Mischungen werden gemäß der vorliegenden Rezeptur in Tabelle 1 und der Mischvorschrift der Tabelle 2 hergestellt. Die Dosierung der Verbindung ist für das Vergleichsbeispiel (Mischung 3) die gleiche wie in Beispiel 3/Mischung 1, also 2,4 phr 3-Mercaptopropyltriethoxysilan. Die Verbindung aus Beispiel 4 wird equimolar dazu, also mit 2,93 phr dosiert (Mischung 4). Die gummitechnischen Prüfungen werden gemäß den Prüfbedingungen aus Tabelle 3 untersucht. Die Ergebnisse der gummitechnischen Prüfungen sind in Tabelle 5 angegeben.

**Tabelle 5**

| **Rohmischungsdaten** | **Einheit** | **Mischung 3 (Vergleichsbsp.)** | **Mischung 4** |
|---|---|---|---|
| ML 1+4, 3. Stufe | [-] | 66 | 59 |
| Dmax-Dmin | [dNm] | 15,2 | 15,9 |

| **Vulkanisatdaten** | **Einheit** | **Mischung 3 (Vergleichsbsp.)** | **Mischung 4** |
|---|---|---|---|
| Zugfestigkeit | [MPa] | 14,3 | 14,3 |
| Bruchdehnung | [%] | 355 | 393 |
| Shore-A-Härte | [-] | 58 | 58 |
| Kontakttemperatur | [°C] | 58 | 57 |
| Einstichtemperatur | [°C] | 107 | 104 |
| Permanent Set | [%] | 2,9 | 3,1 |

Wie man anhand der Daten in der Tabelle 5 erkennen kann, zeichnet sich auch hier die Kautschukmischung mit dem erfindungsgemäßen Silan durch eine verbesserte Verarbeitung aus, da die Mischungsviskosität deutlich niedriger ist.

Ebenfalls ein vorteilhaftes Zug-Dehnungsverhalten wird durch die gegebene höhere Bruchdehnung bei gleicher Zugfestigkeit erreicht. Mischung 4 zeigt bei gleicher Härte einen niedrigeren Wärmeaufbau.

Die Verarbeitung der Mischung 4 ist also gegenüber Mischung 3 verbessert und gleichzeitig werden Vorteile in Vulkanisateigenschaften erreicht.

## Patentansprüche

1. Kautschukmischungen, **dadurch gekennzeichnet, daß** diese mindestens einen Kautschuk und mindestens eine Organosiliciumverbindung der allgemeinen Formel (I),
(Q-)ₖG-Si(-O-CX¹X²-CX¹X³-)₃N (I)
enthalten,
wobei Q gleich oder verschieden und unabhängig voneinander -Halogen, -SCN oder -SH ist,
k gleich 1 oder 2 ist,
G eine unverzweigte, zyklische oder verzweigte, substituierte oder unsubstituierte, gesättigte oder ungesättigte di-, tri-, tetra- oder pentavalente (C₁-C₂₄)-Kohlenwasserstoffkette ist,
X¹, X² und X³ jeweils unabhängig voneinander Wasserstoff (-H), geradkettig unsubstituierte oder verzweigt unsubstituierte (C₁-C₁₆)- Alkyl- oder Arylgruppe bedeuten.

2. Kautschukmischungen gemäß Anspruch 1, **dadurch gekennzeichnet, daß** die Organosiliciumverbindungen gemäß Formel I auf einem inerten organischen oder anorganischen Träger aufgezogen beziehungsweise vermischt oder mit einem organischen oder anorganischen Träger vorreagiert sind.

3. Kautschukmischungen gemäß Anspruch 1, **dadurch gekennzeichnet, daß** diese Füllstoff und gegebenenfalls weitere Kautschukhilfsmittel enthalten.

4. Kautschukmischungen gemäß Anspruch 1, **dadurch gekennzeichnet, daß** der Kautschuk ein Dienkautschuk ist.

5. Verfahren zur Herstellung der Kautschukukmishungen gemäß Anspruch 1, **dadurch gekennzeichnet, daß** man mindestens einen Kautschuk und eine Organosiliciumverbindung der Formel (I) mischt.

6. Verwendung von Kautschukmischungen gemäß Anspruch 1 zur Herstellung von Formkörpern.

7. Verwendung von Kautschukmischungen gemäß Anspruch 1 zur Herstellung von Luftreifen, Reifenlaufflächen, gummihaltigen Reifenbestandteilen, Kabelmänteln, Schläuchen, Treibriemen, Förderbändern, Walzenbelägen, Reifen, Schuhsohlen, Dichtungsringen und Dämpfungselementen.

## Claims

1. Rubber mixtures, **characterized in that** they contain at least one rubber and at least one organosilicon compound of the general formula (I)
(Q-)ₖG-Si(-O-CX¹X²-CX¹X³-)₃N (I)
where Q are identical or different and, independently of one another, are -halogen, -SCN or -SH,
k is 1 or 2,
G is a straight-chain, cyclic or branched, substituted or unsubstituted, saturated or unsaturated di-, tri-, tetra- or pentavalent (C₁-C₂₄) - hydrocarbon chain,
X¹, X² and X³, in each case independently of one another, denote hydrogen (-H) or a straight-chain unsubstituted or branched unsubstituted (C₁-C₁₆)-alkyl or aryl group.

2. Rubber mixtures according to Claim 1, **characterized in that** the organosilicon compounds according to formula I are applied to or mixed with an inert organic or inorganic substrate or are pre-reacted with an organic or inorganic substrate.

3. Rubber mixtures according to Claim 1, **characterized in that** they contain a filler and optionally further rubber auxiliaries.

4. Rubber mixtures according to Claim 1, **characterized in that** the rubber is a diene rubber.

5. Process for the preparation of the rubber mixtures according to Claim 1, **characterized in that** at least one rubber and an organosilicon compound of the formula (I) are mixed.

6. Use of rubber mixtures according to Claim 1 for the production of mouldings.

7. Use of rubber mixtures according to Claim 1 for the production of pneumatic tyres, tyre treads, rubber-containing tyre components, cable sheaths, hoses, drive belts, conveyer belts, roll coverings, tyres, shoe soles, gaskets and damping elements.

## Revendications

1. Compositions de caoutchouc, **caractérisées en ce que** celles-ci contiennent au moins un caoutchouc et au moins un composé organosilicié de formule générale (I),
(Q-)ₖG-Si(-O-CX¹X²-CX¹X³-)₃N (I)
dans laquelle Q est le même ou différent et représente chaque fois indépendamment -halogène, -SCN ou -SH,
k est égal à 1 ou 2,
G est une chaîne hydrocarbonée en C₁-C₂₄ di-, tri-, tétra- ou pentavalente, non ramifiée, cyclique ou ramifiée, substituée ou non substituée,
X¹, X² et X³ représentent chacun indépendamment un atome d'hydrogène (-H), un groupe aryle ou alkyle en C₁-C₁₆ à chaîne droite non substitué ou ramifié non substitué.

2. Compositions de caoutchouc selon la revendication 1, **caractérisées en ce que** les composés organosiliciés selon la formule I sont fixés sur ou mélangés avec un support organique ou inorganique inerte ou ont préalablement réagi avec un support organique ou inorganique.

3. Compositions de caoutchouc selon la revendication 1, **caractérisées en ce que** celles-ci contiennent une charge et éventuellement d'autres adjuvants pour caoutchouc.

4. Compositions de caoutchouc selon la revendication 1, **caractérisées en ce que** le caoutchouc est un caoutchouc diène.

5. Procédé pour la préparation des compositions de caoutchouc selon la revendication 1, **caractérisé en ce qu'**on mélange au moins un caoutchouc et un composé organosilicié de formule (I).

6. Utilisation de compositions de caoutchouc selon la revendication 1, pour la production de corps moulés.

7. Utilisation de compositions de caoutchouc selon la revendication 1, pour la fabrication de pneumatiques à air, de bandes de roulement de pneumatiques, de composants de pneumatiques contenant du caoutchouc vulcanisé, de gaines de câbles, de tuyaux souples, de courroies d'entraînement, de bandes transporteuses, de revêtements de cylindres, de pneumatiques, de semelles de chaussures, de rondelles d'étanchéité et d'éléments amortisseurs.
